# EUROPEAN PATENT SPECIFICATION

(11) **EP 4 506 257 B1**
(45) Date of publication and mention of the grant of the patent: **23.09.2026**
(21) Application number: 24194188.9
(22) Date of filing: 12.08.2024
(51) Int. Cl.: B64D 27/33, B64D 31/18, B64D 33/08

(54) **POWER MANAGEMENT BETWEEN A HEAT ENGINE AND AN ELECTRIC MACHINE FOR AN AIRCRAFT POWERPLANT**
LEISTUNGSMANAGEMENT ZWISCHEN EINEM VERBRENNUNGSMOTOR UND EINER ELEKTRISCHEN MASCHINE FÜR EIN FLUGZEUGTRIEBWERK
GESTION DE LA PUISSANCE ENTRE UN MOTEUR THERMIQUE ET UNE MACHINE ÉLECTRIQUE POUR UN GROUPE MOTOPROPULSEUR D'AVION

(30) Priority: 11.08.2023 US 202318233127
(43) Date of publication of application: 12.02.2025
(73) Proprietor: PRATT & WHITNEY CANADA CORP., Longueuil, Québec J4G 1A1 (CA)
(72) Inventor: RICCI, Trevor T., (01BE5) Longueuil, J4G 1A1 (CA); PAOLETTI, Frank, (01BE5) Longueuil, J4G 1A1 (CA); CUNNINGHAM, Mark, (01BE5) Longueuil, J4G 1A1 (CA)
(74) Representative: Dehns

(56) References cited:
- US-A1- 2022 081 122
- US-A1- 2022 281 351
- US-B2- 10 907 494
- US-B2- 10 953 995

## Description

### TECHNICAL FIELD

This disclosure relates generally to an aircraft and, more particularly, to a propulsion system for the aircraft.

### BACKGROUND INFORMATION

An aircraft propulsion system may include a hybrid electric powerplant for driving rotation of a propulsor rotor. Various types of hybrid electric powerplants and various methods for operating hybrid electric powerplants are known in the art. While these known hybrid electric powerplants and methods of operation have various benefits, there is still room in the art for improvement.

US 10 907 494 B2 discloses a prior art method as set forth in the preamble of claim 1.

### SUMMARY

According to an aspect of the present disclosure, there is provided a method of operation as recited in claim 1.

There is also provided a system for an aircraft as recited in claim 12.

Features of embodiments are set forth in the dependent claims.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft propulsion system.
FIG. 2 is a schematic illustration of the aircraft propulsion system with a turbo-compounded internal combustion engine.
FIG. 3 is a schematic illustration of the aircraft propulsion system with an electric machine system.
FIG. 4 is a flow diagram of a method for operating an aircraft powerplant.

### DETAILED DESCRIPTION

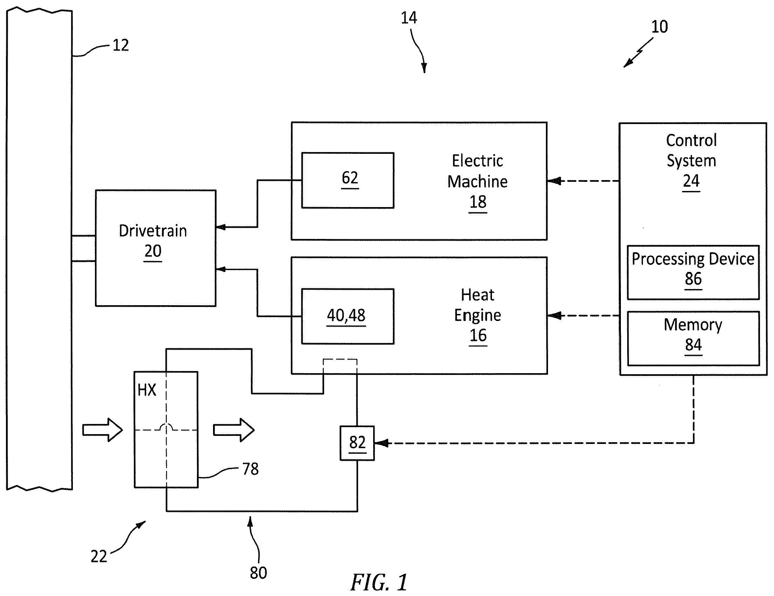

FIG. 1 illustrates a propulsion system 10 for an aircraft. The aircraft may be an airplane, a helicopter, a drone (e.g., an unmanned aerial vehicle (UAV)) or any other manned or unmanned aerial vehicle or system. The aircraft propulsion system 10 of FIG. 1 includes a bladed propulsor rotor 12 and an aircraft powerplant 14 configured to drive rotation of the propulsor rotor 12.

The propulsor rotor 12 is an air mover configured to propel air to generate, for example, aircraft thrust and/or aircraft lift. The propulsor rotor 12 includes a rotor base (e.g., a disk or a hub) and a plurality of propulsor rotor blades (e.g., airfoils, vanes, etc.) arranged circumferentially about and connected to the rotor base. The propulsor rotor 12 may be an open (e.g., un-ducted) propulsor rotor or a ducted propulsor rotor. Examples of the open propulsor rotor include a propeller rotor for a turboprop propulsion system, a propfan rotor for a propfan propulsion system, a pusher fan rotor for a pusher fan propulsion system, and a rotorcraft rotor (e.g., a main helicopter rotor) for a turboshaft propulsion system. An example of the ducted propulsor rotor is a fan rotor for a turbofan propulsion system. However, for ease of description, the propulsor rotor 12 and the aircraft propulsion system 10 are respectively generally described below as the propeller rotor and the turboprop propulsion system.

The aircraft powerplant 14 is configured as a hybrid electric powerplant. The aircraft powerplant 14 of FIG. 1, includes a heat engine 16 and an electric machine 18. The heat engine 16 and the electric machine 18 are operatively coupled to the propulsor rotor 12 and configured to (e.g., independently and/or in combination) drive rotation of the propulsor rotor 12. The aircraft powerplant 14 of FIG. 1, for example, includes a drivetrain 20 (e.g., a geartrain, a transmission, etc.) which operatively couples the heat engine 16 and the electric machine 18 to the propulsor rotor 12 in parallel. The present disclosure, however, is not limited to such an exemplary arrangement. The heat engine 16 and the electric machine 18, for example, may alternatively be operatively coupled with the propulsor rotor 12 in series. In another example, the electric machine 18 may be incorporated into the heat engine 16. Referring again to FIG. 1, the aircraft powerplant 14 also includes a cooling system 22 and a control system 24.

The heat engine 16 may be configured as or otherwise include an internal combustion (IC) engine. This internal combustion engine may be an intermittent combustion internal combustion engine or a continuous combustion internal combustion engine. Examples of the intermittent combustion internal combustion engine include a rotary engine (e.g., a Wankel cycle engine) and a reciprocating piston engine (e.g., an inline (I) engine, a V-engine or a W-engine). An example of the continuous combustion internal combustion engine is a gas turbine engine. The present disclosure, however, is not limited to such exemplary internal combustion engines nor to internal combustion engines in general. The heat engine 16, for example, may also or alternatively include one or more fuel cells, or the like. However, for ease of description, the heat engine 16 is generally described below as the intermittent combustion internal combustion engine.

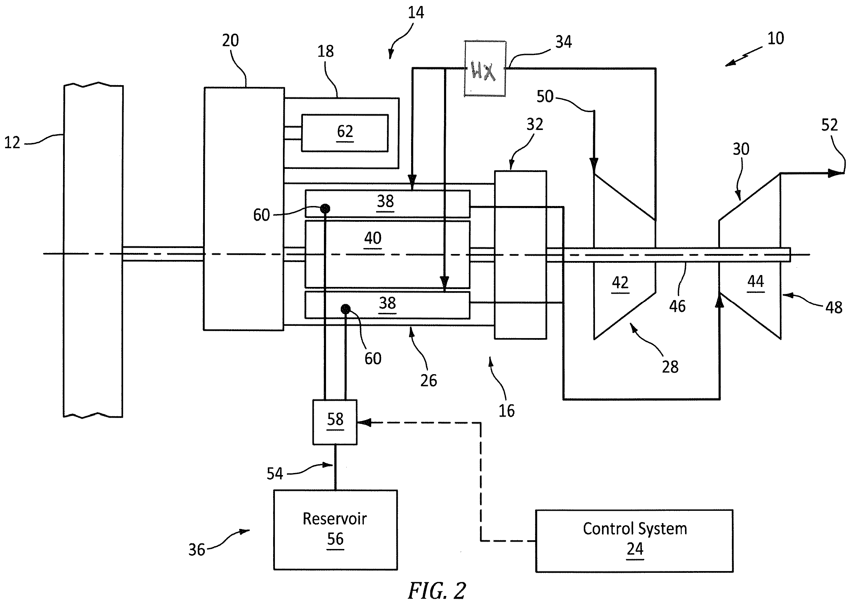

FIG. 2 illustrates an exemplary embodiment of the heat engine 16 as a turbo-compounded heat engine. This heat engine 16 of FIG. 2 includes an engine core 26, a compressor section 28, a turbine section 30 and a transmission 32; e.g., a gear system, a speed change device and/or a variable speed transmission. The heat engine 16 of FIG. 2 also includes an engine flowpath 34 and a fuel system 36.

The engine core 26 of FIG. 2 may be configured as, for example, the rotary engine or the reciprocating piston engine generally described above. This engine core 26 is configured to detonate (e.g., combust) a mixture of fuel and air within one or more combustion zones 38. Each combustion zone 38 may be configured as or otherwise include a combustion chamber, a piston bore and/or the like within the engine core 26 and, more generally, the heat engine 16. The detonation of the fuel-air mixture within the combustion zones 38 drives rotation of an internal engine rotating assembly 40 of the engine core 26 and, more generally, the heat engine 16. This engine rotating assembly 40 may include one or more pistons and/or rotors in and/or along the combustion zones 38, and is rotatable about an engine axis.

The compressor section 28 includes a bladed compressor rotor 42. This compressor rotor 42 may be configured as a radial flow compressor rotor; e.g., an axial inflow-radial outflow compressor rotor, a centrifugal compressor rotor, a compressor impeller, etc. Alternatively, the compressor rotor 42 may be configured as an axial flow compressor rotor; e.g., an axial inflow-axial outflow compressor rotor. The compressor rotor 42 of FIG. 2 includes a compressor rotor base (e.g., a disk or a hub) and a plurality of compressor rotor blades (e.g., airfoils, vanes, etc.). The compressor rotor blades are arranged circumferentially around the compressor rotor base in an array. Each of the compressor rotor blades is connected to (e.g., formed integral with or mechanically fastened, welded, brazed and/or otherwise attached to) and projects radially out from the compressor rotor base. The compressor rotor 42 is rotatable about a compressor axis.

The turbine section 30 includes a bladed turbine rotor 44. This turbine rotor 44 may be configured as a radial flow turbine rotor; e.g., a radial inflow-axial outflow turbine rotor, a centrifugal turbine rotor, a turbine wheel, etc. Alternatively, the turbine rotor 44 may be configured as an axial flow turbine rotor; e.g., an axial inflow-axial outflow turbine rotor. The turbine rotor 44 of FIG. 2 includes a turbine rotor base (e.g., a disk or a hub) and a plurality of turbine rotor blades (e.g., airfoils, vanes, etc.). The turbine rotor blades are arranged circumferentially around the turbine rotor base in an array. Each of the turbine rotor blades is connected to (e.g., formed integral with or mechanically fastened, welded, brazed and/or otherwise attached to) and projects radially out from the turbine rotor base. The turbine rotor 44 is rotatable about a turbine axis, which turbine axis may be parallel (e.g., coaxial) with the compressor axis.

The turbine rotor 44 may be coupled to the compressor rotor 42 through a turbo-compressor shaft 46. At least (or only) the compressor rotor 42, the turbine rotor 44 and the turbo-compressor shaft 46 may collectively form a turbo-compressor rotating assembly 48; e.g., a spool. This turbo-compressor rotating assembly 48 and its turbine rotor 44 are operatively coupled to and rotatable with the engine rotating assembly 40 through the transmission 32. The engine rotating assembly 40 may be operatively coupled to and rotatable with the propulsor rotor 12 (e.g., independent of the electric machine 18) through the drivetrain 20. With such an arrangement, the turbo-compressor rotating assembly 48 may rotate at a different rotational velocity than the engine rotating assembly 40. Similarly, the engine rotating assembly 40 may rotate at a different rotational velocity than the propulsor rotor 12.

The engine flowpath 34 of FIG. 2 longitudinally extends sequentially through the compressor section 28 (e.g., across the compressor rotor 42), the heat engine 16 (e.g., along / across the pistons and/or the rotors of the engine rotating assembly 40) and the turbine section 30 (e.g., across the turbine rotor 44) from an airflow inlet 50 into the engine flowpath 34 to a combustion products exhaust 52 from the engine flowpath 34. The flowpath inlet 50 may also be an airflow inlet into the aircraft powerplant 14. The flowpath exhaust 52 may also be a combustion products exhaust from the aircraft powerplant 14.

The fuel system 36 is configured to deliver fuel to the combustion zones 38 within the engine core 26 and, more generally, the heat engine 16. The fuel system 36 of FIG. 2, for example, includes a fuel circuit 54, a fuel reservoir 56, a fuel regulator 58 and one or more fuel injectors 60.

The fuel circuit 54 is fluidly coupled with an outlet of the fuel reservoir 56. This fuel circuit 54 extends longitudinally through the fuel regulator 58 to the fuel injectors 60. The fuel circuit 54 thereby fluidly couples the fuel reservoir 56 and its reservoir outlet to the fuel injectors 60 through the fuel regulator 58.

The fuel reservoir 56 is configured to store fuel before, during and/or after aircraft powerplant operation. The fuel reservoir 56, for example, may be configured as or otherwise include a tank, a cylinder, a pressure vessel, a bladder or any other type of fuel storage container.

The fuel regulator 58 is configured to selectively direct and/or meter a flow of the fuel from the fuel reservoir 56 to one or more of the fuel injectors 60. The fuel regulator 58, for example, may be configured as or otherwise include a fuel pump and/or a valve (or valve system).

The fuel injectors 60 are arranged with (e.g., on, along, in, etc.) the combustion zones 38. These fuel injectors 60 are configured to direct (e.g., inject) the fuel into the combustion zones 38 to mix with compressed air for subsequent combustion.

During operation of the heat engine 16, the fuel system 36 delivers (e.g., injects) fuel into the combustion zones 38. The fuel is mixed with compressed air within the combustion zones 38. This fuel-air mixture is ignited, and combustion products generated therefrom drive rotation of the engine rotating assembly 40. The rotation of the engine rotating assembly 40 drives rotation of the propulsor rotor 12 through the drivetrain 20, and the rotating propulsor rotor 12 generates aircraft thrust and/or lift. The combustion products further flow out of the engine core 26 into the turbine section 30 and drive rotation of the turbine rotor 44. The rotation of the turbine rotor 44 drives rotation of the compressor rotor 42, and the rotating compressor rotor 42 compresses air entering the aircraft powerplant 14 and its engine flowpath 34 through the flowpath inlet 50 to provide the compressed air to the heat engine 16. The rotation of the turbine rotor 44 also drives rotation of (e.g., boosts mechanical power to) the engine rotating assembly 40 through the transmission 32. The rotation of the turbine rotor 44 may thereby also drive rotation of (e.g., boost mechanical power to) the propulsor rotor 12 through the powerplant members.

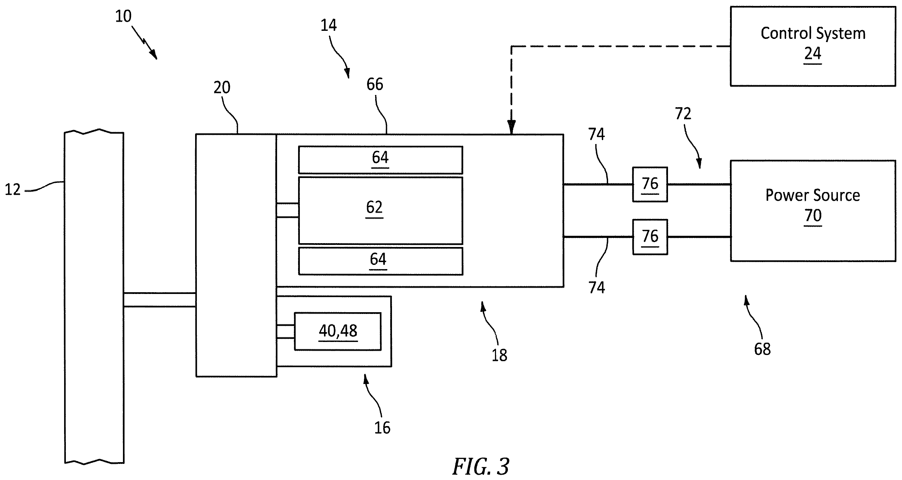

Referring to FIG. 3, the electric machine 18 may be configured as an electric motor and/or an electric generator; e.g., a motor-generator. Alternatively, the electric machine 18 may be configured as a dedicated electric motor.

The electric machine 18 of FIG. 3 includes an electric machine rotor 62, an electric machine stator 64 and an electric machine housing 66. The machine rotor 62 is rotatable about a rotational axis of the machine rotor 62, which rotational axis may also be an axial centerline of the electric machine 18. The machine stator 64 of FIG. 3 is radially outboard of and circumscribes the machine rotor 62. With this arrangement, the electric machine 18 is configured as a radial flux electric machine. The electric machine 18 of the present disclosure, however, is not limited to such an exemplary rotor-stator configuration nor to radial flux arrangements. The machine rotor 62, for example, may alternatively be radially outboard of and circumscribe the machine stator 64. In another example, the machine rotor 62 may be axially next to the machine stator 64 configuring the electric machine 18 as an axial flux electric machine. Referring again to FIG. 3, the machine rotor 62 and the machine stator 64 are at least partially or completely housed within the machine housing 66.

The machine rotor 62 may be operatively coupled to and rotatable with the propulsor rotor 12 (e.g., independent of the heat engine 16) through the drivetrain 20. With such an arrangement, the machine rotor 62 may rotate at a different rotational velocity than the propulsor rotor 12.

During a motor mode of operation, the electric machine 18 operates as the electric motor to convert electricity received from a power system 68 into mechanical power. The machine stator 64, for example, may generate an electromagnetic field with the machine rotor 62 using the electricity. The electromagnetic field may drive rotation of the machine rotor 62, and the machine rotor 62 may drive rotation of one or more powerplant components (e.g., 12, 40) operatively coupled thereto through, for example, the drivetrain 20. During the motor mode of operation, mechanical power output by the electric machine 18 may be utilized for various purposes. For example, the electric machine mechanical power may boost mechanical power output by the heat engine 16 for driving rotation of the propulsor rotor 12. In another example, the electric machine mechanical power may completely power rotation of the propulsor rotor 12 and/or rotation of the engine rotating assembly 40 (see FIG. 2); e.g., during startup of the heat engine 16. Of course, the heat engine 16 may completely power rotation of the propulsor rotor 12 during other modes of operation.

During a generator mode of operation, the electric machine 18 operates as the electric generator to convert mechanical power into electricity. For example, the heat engine 16 and its engine rotating assembly 40 (see FIG. 2) may drive rotation of the machine rotor 62 through the drivetrain 20. The rotation of the machine rotor 62 may generate an electromagnetic field with the machine stator 64. The machine stator 64 may convert energy from the electromagnetic field into the electricity. The electric machine 18 may output this generated electricity to the power system 68 for further use; e.g., storage, provision to other aircraft components and/or systems, etc.

The power system 68 of FIG. 3 includes an electrical power source 70 and an electrical power bus 72. The power source 70 is configured to store electricity. The power source 70 is also configured to provide the stored electricity to the electric machine 18 and/or receive electricity from the electric machine 18. The power source 70, for example, may be configured as or otherwise include one or more electricity storage devices; e.g., batteries, supercapacitors, etc. The power bus 72 electrically couples the power source 70 to the electric machine 18. The power bus 72, for example, may include one or more electrical lines 74; e.g., high voltage lines. Each electrical line 74 of FIG. 3 is electrically coupled to and extends between the power source 70 and the electric machine 18. Of course, the power system 68 may also include one or more additional electric devices 76 electrically coupled between the power source 70 and the electric machine 18 along one or more of the electrical lines 74. Examples of these electric devices 76 include, but are not limited to, switches, current regulators, converters, amplifiers, buffers and the like.

Referring to FIG. 1, the cooling system 22 is configured to dissipate a thermal load (e.g., a heat load) generated and output by the heat engine 16. The cooling system 22 of FIG. 1, for example, includes a heat exchanger 78 (e.g., a radiator), a cooling circuit 80, a flow regulator 82 (e.g., a pump and/or valve system) and coolant; e.g., a fluid such as lubricant (e.g., oil), glycol, etc. The cooling circuit 80 fluidly couples the heat exchanger 78 to the heat engine 16; however, it is contemplated the cooling circuit 80 may also or alternatively fluidly couple the heat exchanger 78 to the electric machine 18 and/or the drivetrain 20. The cooling circuit 80 also extends through the heat exchanger 78 and the heat engine 16. The flow regulator 82 is inline with the cooling circuit 80. The flow regulator 82 is configured to direct (e.g., circulate) the coolant through the cooling circuit 80 between the heat engine 16 and the heat exchanger 78. With this arrangement, heat energy from the heat load may be transferred from the heat engine 16 into the coolant. This heated coolant is directed by the cooling circuit 80 to the heat exchanger 78. The heat exchanger 78 transfers at least some or all of the heat energy from the coolant and into (e.g., ambient) air flowing through and/or along the heat exchanger 78, which air may be part of a passive flow based on aircraft speed, boosted by the propulsor rotor 12, etc. The cooled coolant is then directed by the cooling circuit 80 back to the heat engine 16 to absorb additional heat energy. The cooling system 22 may thereby cool the heat engine 16. More particularly, the cooling system 22 may extract the heat energy - the thermal load - from the heat engine 16 and then dissipate that heat energy into the air.

The control system 24 is in signal communication with (e.g., hardwired and/or wirelessly coupled to) the aircraft powerplant 14 and the cooling system 22. The control system 24 may be configured as an onboard engine controller; e.g., an electronic engine controller (EEC), an electronic control unit (ECU), a full-authority digital engine controller (FADEC), etc. The control system 24 may be implemented with a combination of hardware and software. The hardware may include a memory 84 and at least one processing device 86, which processing device 86 may include one or more single-core and/or multi-core processors. The hardware may also or alternatively include analog and/or digital circuitry other than that described above.

The memory 84 is configured to store software (e.g., program instructions) for execution by the processing device 86, which software execution may control and/or facilitate performance of one or more operations such as those described in the methods below. The memory 84 may be a non-transitory computer readable medium. For example, the memory 84 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

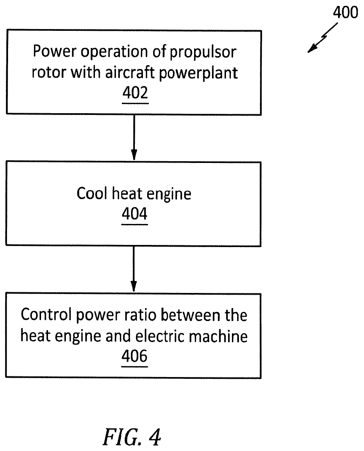

FIG. 4 is a flow diagram of a method 400 for operating an aircraft propulsion system. For ease of description, the operating method 400 is described below with respect to the aircraft propulsion system 10 of FIG. 1 and its heat engine 16 of FIG. 2 and its electric machine 18 of FIG. 3.

In step 402, the aircraft powerplant 14 is operated to output mechanical power ("powerplant power") for powering operation of the propulsor rotor 12 and, driving rotation of the propulsor rotor 12. At least a portion (or an entirety) of the powerplant power ("engine power") may be supplied to the propulsor rotor 12 through the drivetrain 20 by the heat engine 16 as described above. In addition or alternatively, at least a portion (or an entirety) of the powerplant power ("machine power") may be supplied to the propulsor rotor 12 through the drivetrain 20 by the electric machine 18 operating as the electric motor as described above. The powerplant power may thereby be characterized by a ratio of the engine power to the machine power ("power ratio") - a power ratio for the aircraft powerplant 14. This power ratio may range from 100:0 (where the engine power accounts for 100 percent of the powerplant power) to 0: 100 (where the machine power accounts for 100 percent of the powerplant power), as well as to select number or an infinite number of intermediate levels therebetween; e.g., 75:25, 50:50, 25:75, etc.

In step 404, the cooling system 22 is operated to cool the heat engine 16. For example, the cooling system 22 is operated to dissipate the thermal load generated and output by the heat engine 16 into the air using the heat exchanger 78.

The heat engine 16 generates the thermal load during the combustion of the fuel-air mixture. This thermal load is related to the mechanical power output of the heat engine 16. For example, when the heat engine 16 is throttled up to output additional mechanical power to the propulsor rotor 12, the fuel system 36 injects additional fuel into the combustion zones 38 for combustion. The combustion of additional fuel increases the temperature of the combustion products within the engine flowpath 34 and, thus, the temperature of various heat engine components lining the engine flowpath 34 or otherwise thermally coupled thereto. In another example, when the heat engine 16 is throttled down to output less mechanical power to the propulsor rotor 12, the fuel system 36 injects less fuel into the combustion zones 38 for combustion. The combustion of less fuel decreases the temperature of the combustion products within the engine flowpath 34 and, thus, the temperature of various heat engine components lining the engine flowpath 34 or otherwise thermally coupled thereto.

Under normal operating conditions, the cooling system 22 may be sized with a cooling capacity that meets or exceeds cooling requirements of the heat engine 16 during aircraft flight; e.g., aircraft climb, aircraft cruise and/or aircraft descent. The cooling system 22 may thereby be capable of (e.g., fully) dissipating the thermal load output by the heat engine 16 whether the heat engine 16 is operating at a low power setting (e.g., a low throttle position), an intermediate power setting (e.g., an intermediate throttle position), or a high power setting (e.g., a high throttle position) such as maximum engine power. The cooling capacity of the cooling system 22, however, is variable. For example, when a temperature of the air (e.g., ambient air temperature outside of the aircraft) is relatively low (e.g., cool), the cooling capacity of the cooling system 22 is relatively high. However, when the air temperature is relatively high (e.g., hot), the cooling capacity of the cooling system 22 is relatively low. **In** another example, when a speed of the air flowing through and/or along the heat exchanger 78 is relatively high (e.g., fast), the cooling capacity of the cooling system 22 is relatively high. However, when the air speed is relatively low (e.g., slow), the cooling capacity of the cooling system 22 is relatively low. Moreover, the air speed may be influenced by various factors such as an airspeed of the aircraft, a ground speed of the aircraft, a rotational velocity of the propulsor rotor 12 (e.g., where the heat exchanger 78 is downstream of the propulsor rotor 12), etc. Therefore, when the aircraft is on ground stationary, taxiing and/or (e.g., initially) accelerating for takeoff (e.g., a rolling takeoff), the cooling capacity of the cooling system 22 may be relatively low since the air speed is relatively low and/or the temperature is relatively high (particularly compared to ambient air temperature at cruise altitude). Under such conditions, the cooling capability of the cooling system 22 may be less than the thermal load output by the heat engine 16 while operating at its high power setting, its intermediate power setting or even at its low power setting (e.g., idle) under certain conditions.

**In** step 406, the power ratio is controlled based on the cooling capacity of the cooling system 22. For example, the propulsor rotor 12 may need a certain amount of mechanical power during a certain mode of operation; e.g., aircraft taxiing, (e.g., initially) accelerating for takeoff (e.g., a rolling takeoff), etc. To fulfill this power demand with (e.g., only) the heat engine 16, the heat engine 16 may need to be operated at a first power setting. However, the thermal load to be outputted from the heat engine 16 to regulate an operational temperature (e.g., a combustion products temperature, a component temperature, etc.) of the heat engine 16 within specification while operating at the first power setting may be higher than the cooling capacity of the cooling system 22. Thus, in this example, the cooling system 22 cannot meet the cooling demand for the heat engine 16. Therefore, the power ratio may be decreased such that the heat engine 16 operates at a second power setting less than the first power setting. This second power setting is selected such that the thermal load to be outputted from the heat engine 16 to regulate the operational temperature of the heat engine 16 within specification is equal to or less than (e.g., by a safety factor) the cooling capacity of the cooling system 22. In other words, the power setting of the heat engine 16 may be lowered to a level where the cooling capacity of the cooling system 22 meets or exceeds the cooling demand of the heat engine 16. By contrast, the electric machine 18 is operated as the electric motor to boost (or completely supply) the mechanical power to the propulsor rotor 12. The electric machine 18 may thereby make up for the lower power setting of the heat engine 16 to ensure the propulsor rotor 12 is properly powered for operation. By contrast, when the cooling capacity of the cooling system 22 is relatively high, the power ratio may be increased even to a level where the heat engine 16 is providing full power to the propulsor rotor 12 and the electric machine 18 is non-operational (at least as the electric motor).

By maintaining the thermal load output by the heat engine 16 at or below the cooling capacity of the cooling system 22, the operational temperature of the heat engine 16 may be regulated. Thus, the power ratio is also controlled to maintain the operational temperature of the heat engine 16 within specification. For example, to decrease the operational temperature of the heat engine 16, the power level of the heat engine 16 may be decreased thereby decreasing the power ratio. Here, the power level of the electric machine 18 is conversely increased. In another example, to increase the operational temperature of the heat engine 16 (or accommodate an increase), the power level of the heat engine 16 may be increased thereby increasing the power ratio. Here, the power level of the electric machine 18 is conversely decreased. The operational temperature may be regulated to maintain the operational temperature within a temperature range, the bounds of which may be constant or variable based on one or more other operational parameters. In another example, the operational temperature of may be regulated to maintain the operational temperature at (e.g., equal to) or below (e.g., by a safety factor) a threshold, which threshold may be constant or variable based on one or more other operational parameters.

With the foregoing operability, the electric machine 18 may be selectively operated to facilitate provision of an optimized cooling system. In other words, the cooling system 22 may be optimized for stages of powerplant operation at which the aircraft powerplant 14 spends the most time; e.g., during aircraft flight versus on ground operation. By contrast, if the electric machine 18 was only used during flight, then the cooling system 22 may need to be configured with a greater cooling capacity. This may increase cooling system coolant flow requirements, size, weight, drag and/or cost.

While the step 406 is described above as varying the power ratio, it is contemplated the engine power and/or the machine power may be otherwise varied to manage the thermal load of the heat engine 16 and/or regulate the operational temperature of the heat engine 16. For example, the engine power and the machine power may alternatively be proportionally increased or decreased as needed. Thus, the power ratio may remain uniform; e.g., the same.

In some embodiments, the step 406 may be manually selected by an aircraft pilot. In other embodiments, the step 406 may be automatically selected as needed by the control system 24. Moreover, when the cooling capacity of the cooling system 22 is operable to meet cooling demand of the heat engine 16 even when the heat engine 16 is operated to deliver full powerplant power (e.g., when the electric machine 18 is non-operational at least as the electric motor), then the performance of the step 406 may be discontinued in favor of one or more other control strategies. For example, during aircraft flight, the heat engine 16 may alternatively be operated at its most efficient power level, and the electric machine 18 may be selectively operated as the electric motor when needed to provide additional powerplant power; e.g., for a maneuver, aircraft climb, etc. A temporary override may be provided to facilitate operation at a condition where thermal energy production is greater than cooling capacity to provide, for example, boosted (e.g., emergency) power.

While the performance of the step 406 is generally described above with respect to operation of the aircraft powerplant 14 while the aircraft is on ground, the performance of the step 406 is not limited on ground operation. The power ratio, for example, may continue to be controlled based on the cooling capacity of the cooling system 22 and/or to regulate the operation temperature of the heat engine 16 while the aircraft is in air flying. For example, the performance of the step 406 may be continued until the aircraft has reached a certain altitude, the ambient temperature is below a certain level, the power demand dips below a certain level, etc. Moreover, it is also contemplated the performance of the step 406 may also or alternatively be performed during aircraft descent and/or aircraft landing.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims.

## Claims

1. A method of operation, comprising:
driving rotation of a propulsor rotor (12) of an aircraft using mechanical power output from a powerplant (14), the powerplant (14) including a heat engine (16) and an electric machine (18), the heat engine (16) providing a first portion of the mechanical power, and the electric machine (18) providing a second portion of the mechanical power; and
regulating an operational temperature of the heat engine (16) by controlling the first portion of the mechanical power generated by the heat engine (16) and the second portion of the mechanical power generated by the electric machine (18),
**characterised in that** the method further comprises:
cooling the heat engine (16) using a cooling system (22); and
the cooling system (22) receiving a thermal load from the heat engine (16), wherein the first portion of the mechanical power generated by the heat engine (16) and the second portion of the mechanical power generated by the electric machine (18) are further controlled to maintain the thermal load at or below a cooling capacity of the cooling system (22).

2. The method of claim 1, wherein the regulating of the operational temperature comprises at least one of:
increasing a ratio of the first portion of the mechanical power generated by the heat engine (16) to the second portion of the mechanical power generated by the electric machine (18) to increase the operational temperature; or
decreasing the ratio of the first portion of the mechanical power generated by the heat engine (16) to the second portion of the mechanical power generated by the electric machine (18) to decrease the operational temperature.

3. The method of claim 1 or 2, wherein the operational temperature is regulated to maintain the operational temperature within a temperature range.

4. The method of claim 1 or 2, wherein the operational temperature is regulated to maintain the operational temperature below a threshold.

5. The method of any preceding claim, wherein the regulating of the operational temperature is performed while the aircraft is on ground.

6. The method of any of claims 1 to 4, wherein the regulating of the operational temperature is performed while the aircraft is accelerating for takeoff.

7. The method of any preceding claim, wherein the heat engine (16) comprises a gas turbine engine.

8. The method of any of claims 1 to 6, wherein the heat engine (16) comprises a rotary engine.

9. The method of any of claims 1 to 6, wherein the heat engine (16) comprises a fuel cell.

10. The method of any preceding claim, wherein the propulsor rotor (12) comprises an open propulsor rotor.

11. The method of any of claims 1 to 9, wherein the propulsor rotor (12) comprises a ducted propulsor rotor.

12. A system (10) for an aircraft, comprising:
a propulsor rotor (12);
a powerplant (14) configured to output mechanical power to drive rotation of the propulsor rotor (12), the powerplant (14) comprising a heat engine (16) and an electric machine (18), the heat engine (16) configured to provide a first portion of the mechanical power, and the electric machine (18) configured to provide a second portion of the mechanical power; and
a control system (24) configured to operate the powerplant to regulate an operational temperature of the heat engine (16) by controlling a ratio of the first portion of the mechanical power generated by the heat engine (16) to the second portion of the mechanical power generated by the electric machine (18),
**characterised in that**:
the system further comprises a cooling system (22) configured to dissipate a thermal load output from the heat engine (16) while providing the first portion of the mechanical power;
the cooling system (22) has a cooling capacity; and
the control system (24) is further configured to control the ratio of the first portion of the mechanical power generated by the heat engine (16) to the second portion of the mechanical power generated by the electric machine (18) based on the cooling capacity.

## Patentansprüche

1. Betriebsverfahren, umfassend:
Antreiben einer Drehung eines Antriebsrotors (12) eines Luftfahrzeugs unter Verwendung einer mechanischen Leistungsabgabe von einem Triebwerk (14), wobei das Triebwerk (14) eine Wärmekraftmaschine (16) und eine elektrische Maschine (18) beinhaltet, wobei die Wärmekraftmaschine (16) einen ersten Teil der mechanischen Leistung bereitstellt, und die elektrische Maschine (18) einen zweiten Teil der mechanischen Leistung bereitstellt; und
Regulieren einer Betriebstemperatur der Wärmekraftmaschine (16) durch Steuern des ersten Teils der mechanischen Leistung, der durch die Wärmekraftmaschine (16) erzeugt wird, und des zweiten Teils der mechanischen Leistung, der durch die elektrische Maschine (18) erzeugt wird,
**dadurch gekennzeichnet, dass** das Verfahren ferner Folgendes umfasst:
Kühlen der Wärmekraftmaschine (16) unter Verwendung eines Kühlsystems (22); und
Empfangen einer thermischen Last von der Wärmekraftmaschine (16) durch das Kühlsystem (22), wobei der erste Teil der mechanischen Leistung, der durch die Wärmekraftmaschine (16) erzeugt wird, und der zweite Teil der mechanischen Leistung, der durch die elektrische Maschine (18) erzeugt wird, ferner gesteuert werden, um die thermische Last bei oder unter einer Kühlkapazität des Kühlsystems (22) zu halten.

2. Verfahren nach Anspruch 1, wobei das Regulieren der Betriebstemperatur mindestens eines von Folgendem umfasst:
Erhöhen eines Verhältnisses des ersten Teils der mechanischen Leistung, der durch den Wärmekraftmaschine (16) erzeugt wird, zu dem zweiten Teil der mechanischen Leistung, der durch die elektrische Maschine (18) erzeugt wird, um die Betriebstemperatur zu erhöhen; oder
Verringern des Verhältnisses des ersten Teils der mechanischen Leistung, der durch die Wärmekraftmaschine (16) erzeugt wird, zu dem zweiten Teil der mechanischen Leistung, der durch die elektrische Maschine (18) erzeugt wird, um die Betriebstemperatur zu verringern.

3. Verfahren nach Anspruch 1 oder 2, wobei die Betriebstemperatur reguliert wird, um die Betriebstemperatur innerhalb eines Temperaturbereichs zu halten.

4. Verfahren nach Anspruch 1 oder 2, wobei die Betriebstemperatur reguliert wird, um die Betriebstemperatur unter einem Schwellenwert zu halten.

5. Verfahren nach einem der vorhergehenden Ansprüche, wobei das Regulieren der Betriebstemperatur durchgeführt wird, während sich das Luftfahrzeug am Boden befindet.

6. Verfahren nach einem der Ansprüche 1 bis 4, wobei das Regulieren der Betriebstemperatur durchgeführt wird, während das Luftfahrzeug für einen Start beschleunigt.

7. Verfahren nach einem der vorhergehenden Ansprüche, wobei die Wärmekraftmaschine (16) ein Gasturbinentriebwerk umfasst.

8. Verfahren nach einem der Ansprüche 1 bis 6, wobei die Wärmekraftmaschine (16) einen Rotationsmotor umfasst.

9. Verfahren nach einem der Ansprüche 1 bis 6, wobei die Wärmekraftmaschine (16) eine Brennstoffzelle umfasst.

10. Verfahren nach einem der vorhergehenden Ansprüche, wobei der Antriebsrotor (12) einen offenen Antriebsrotor umfasst.

11. Verfahren nach einem der Ansprüche 1 bis 9, wobei der Antriebsrotor (12) einen ummantelten Antriebsrotor umfasst.

12. System (10) für ein Luftfahrzeug, umfassend:
einen Antriebsrotor (12);
ein Triebwerk (14), das konfiguriert ist, um mechanische Leistung auszugeben, um eine Drehung des Antriebsrotors (12) anzutreiben, wobei das Triebwerk (14) eine Wärmekraftmaschine (16) und eine elektrische Maschine (18) umfasst, wobei die Wärmekraftmaschine (16) konfiguriert ist, um einen ersten Teil der mechanischen Leistung bereitzustellen, und die elektrische Maschine (18) konfiguriert ist, um einen zweiten Teil der mechanischen Leistung bereitzustellen; und
ein Steuersystem (24), das konfiguriert ist, um das Triebwerk zu betreiben, um eine Betriebstemperatur der Wärmekraftmaschine (16) durch Steuern eines Verhältnisses des ersten Teils der mechanischen Leistung, der durch die Wärmekraftmaschine (16) erzeugt wird, zu dem zweiten Teil der mechanischen Leistung, der durch die elektrische Maschine (18) erzeugt wird, zu regulieren, **dadurch gekennzeichnet, dass**:
das System ferner ein Kühlsystem (22) umfasst, das konfiguriert ist, um eine thermische Last, die von der Wärmekraftmaschine (16) ausgegeben wird, abzuleiten, während des Bereitstellens des ersten Teils der mechanischen Leistung;
das Kühlsystem (22) eine Kühlkapazität aufweist; und
das Steuersystem (24) ferner konfiguriert ist, um das Verhältnis des ersten Teils der mechanischen Leistung, der durch die Wärmekraftmaschine (16) erzeugt wird, zu dem zweiten Teil der mechanischen Leistung, der durch die elektrische Maschine (18) erzeugt wird, basierend auf der Kühlkapazität zu steuern.

## Revendications

1. Procédé de fonctionnement, comprenant :
l'entraînement en rotation d'un rotor de propulseur (12) d'un avion en utilisant une puissance mécanique produite en sortie par un groupe motopropulseur (14), le groupe motopropulseur (14) comportant un moteur thermique (16) et une machine électrique (18), le moteur thermique (16) fournissant une première partie de la puissance mécanique, et la machine électrique (18) fournissant une seconde partie de la puissance mécanique ; et
la régulation d'une température de fonctionnement du moteur thermique (16) en commandant la première partie de la puissance mécanique générée par le moteur thermique (16) et la seconde partie de la puissance mécanique générée par la machine électrique (18),
**caractérisé en ce que** le procédé comprend en outre :
le refroidissement du moteur thermique (16) en utilisant un système de refroidissement (22) ; et
le système de refroidissement (22) recevant une charge thermique du moteur thermique (16), dans lequel la première partie de la puissance mécanique générée par le moteur thermique (16) et la seconde partie de la puissance mécanique générée par la machine électrique (18) sont en outre commandées pour maintenir la charge thermique au niveau ou en dessous d'une capacité de refroidissement du système de refroidissement (22).

2. Procédé selon la revendication 1, dans lequel la régulation de la température de fonctionnement comprend au moins l'une :
d'une augmentation d'un rapport entre la première partie de la puissance mécanique générée par le moteur thermique (16) et la seconde partie de la puissance mécanique générée par la machine électrique (18) afin d'augmenter la température de fonctionnement ; ou
d'une réduction du rapport entre la première partie de la puissance mécanique générée par le moteur thermique (16) et la seconde partie de la puissance mécanique générée par la machine électrique (18) afin de réduire la température de fonctionnement.

3. Procédé selon la revendication 1 ou la revendication 2, dans lequel la température de fonctionnement est régulée pour maintenir la température de fonctionnement à l'intérieur d'une plage de température.

4. Procédé selon la revendication 1 ou la revendication 2, dans lequel la température de fonctionnement est régulée pour maintenir la température de fonctionnement en dessous d'un seuil.

5. Procédé selon une quelconque revendication précédente, dans lequel la régulation de la température de fonctionnement est effectuée pendant que l'avion est au sol.

6. Procédé selon l'une quelconque des revendications 1 à 4, dans lequel la régulation de la température de fonctionnement est effectuée pendant que l'avion accélère pour le décollage.

7. Procédé selon une quelconque revendication précédente, dans lequel le moteur thermique (16) comprend un moteur à turbine à gaz.

8. Procédé selon l'une quelconque des revendications 1 à 6, dans lequel le moteur thermique (16) comprend un moteur rotatif.

9. Procédé selon l'une quelconque des revendications 1 à 6, dans lequel le moteur thermique (16) comprend une pile à combustible.

10. Procédé selon une quelconque revendication précédente, dans lequel le rotor de propulseur (12) comprend un rotor de propulseur ouvert.

11. Procédé selon l'une quelconque des revendications 1 à 9, dans lequel le rotor de propulseur (12) comprend un rotor de propulseur caréné.

12. Système (10) pour un avion, comprenant :
un rotor de propulseur (12) ;
un groupe motopropulseur (14) configuré pour produire en sortie une puissance mécanique afin d'entraîner la rotation du rotor de propulseur (12), le groupe motopropulseur (14) comprenant un moteur thermique (16) et une machine électrique (18), le moteur thermique (16) étant configuré pour fournir une première partie de la puissance mécanique, et la machine électrique (18) étant configurée pour fournir une seconde partie de la puissance mécanique ; et
un système de commande (24) configuré pour faire fonctionner le groupe motopropulseur afin de réguler une température de fonctionnement du moteur thermique (16) en commandant un rapport entre la première partie de la puissance mécanique générée par le moteur thermique (16) et la seconde partie de la puissance mécanique générée par la machine électrique (18),
**caractérisé en ce que** :
le système comprend en outre un système de refroidissement (22) configuré pour dissiper une charge thermique produite en sortie par le moteur thermique (16) tout en fournissant la première partie de la puissance mécanique ;
le système de refroidissement (22) présente une capacité de refroidissement ; et
le système de commande (24) est en outre configuré pour commander le rapport entre la première partie de la puissance mécanique générée par le moteur thermique (16) et la seconde partie de la puissance mécanique générée par la machine électrique (18) sur la base de la capacité de refroidissement.
